# EUROPEAN PATENT APPLICATION

(11) **EP 4 702 879 A1**
(43) Date of publication of application: **04.03.2026**
(21) Application number: 24220365.1
(22) Date of filing: 16.12.2024
(51) Int. Cl.: A47C 7/38, A47C 20/02, B60N 2/882

(54) **SUPPORT RECEIVER AND SUPPORT STRUCTURE USING THE SAME**

(30) Priority: 27.08.2024 JP 2024145651
(71) Applicant: Koyo Corporation, Osaka 593-8312 (JP)
(72) Inventor: YAMASHITA, Masanobu, Osaka 593-8312 (JP); NAGATANI, Yoichi, Osaka 593-8312 (JP); SAWADA, Akifumi, Osaka 593-8312 (JP); MORI, Jumpei, Osaka 593-8312 (JP)
(74) Representative: Mewburn Ellis LLP

(57) **Abstract**

The present invention provides a support receiver which not only has a small number of parts and assembly man-hours but also has no risk of losing parts, and a support structure using the support receiver.

A support receiver (20) that is attached to an attachment hole (7) of a base material (6) and has a cylindrical body (30) that supports a supported tool (10) includes: an attachment means (36) that is provided on an outer peripheral surface of the cylindrical body (30) and is used to attach the cylindrical body (30) to an inner peripheral surface of the attachment hole (7) of the base material (6); and at least one elastic piece (38) that is cut out by a slit (37) provided in the cylindrical body (30) and is provided with a locking claw portion (39) on an inner peripheral surface to retain the supported tool (10).

## Description

### TECHNICAL FIELD

The present invention is, for example, a support receiver for supporting an angle adjustment fitting used for a headrest of a sofa or the like.

### BACKGROUND ART:

An example of a conventional support receiver includes a headrest support device that is provided in an upper portion of a seat back of a vehicle seat, holds a headrest 8 that supports a head of a seated person, and can adjust a height of the headrest 8 in a vertical direction. The headrest support device includes: two stay guides 1, 1 into which two headrest stays 81, 81 provided in the headrests 8 are fitted, the two stay guides 1, 1 serving to hold the two headrest stays 81, 81 at predetermined positions; strip-shaped stay pressing portions 15, 15 being formed at a part of respective tubular portions 11, 11 forming the stay guides 1, 1, the strip-shaped stay pressing portions 15, 15 formed at a part thereof; and holding clips 2, 2 provided at the respective tubular portions including the stay pressing portions 15, 15, the holding clips 2, 2 operating to press the stay pressing portions 15, 15 toward inner surface sides (see Patent Document 1).

Patent Document
Patent Document 1: JP 2012-254648 A

### SUMMARY

### Problems to be Solved by the Invention

In the headrest support device, however, it is necessary to attach the separate holding clips 2 to the tubular portions 11 to retain the two headrest stays 81 of the headrests 8. This not only cause a large number of parts and assembly man hours, but also cause the holding clip 2 having a small size and a strong spring force to be easily lost.

In view of the problems described above, an object of the present invention is to provide a support receiver which not only has a small number of parts and assembly man-hours but also has no risk of losing parts, and a support structure using the support receiver.

### Solutions to the Problems

In order to solve the problems described above, a support receiver according to the present invention which is a support receiver attached to an attachment hole of a base material and has a cylindrical body that supports a supported tool includes:
an attachment means that is provided on an outer peripheral surface of the cylindrical body and is used to attach the cylindrical body to an inner peripheral surface of the attachment hole of the base material; and
at least one elastic piece that is cut out by a slit provided in the cylindrical body and is provided with a locking claw portion on an inner peripheral surface to retain the supported tool.

### Effects of the Invention

According to the present invention, the elastic piece capable of retaining the supported tool is provided integrally with the cylindrical body, so that the number of parts and assembly man-hours are reduced, which improves productivity.

In addition, the elastic piece is provided integrally with the cylindrical body, so that there is no risk of components being disjoined and lost.

In an embodiment of the present invention, an annular flange portion may be provided at an upper end of the cylindrical body.

The present embodiment enables easy and accurate positioning operation of the support receiver with respect to the attachment hole of the base material.

In an embodiment of the present invention, the cylindrical body may be dividable along an axial direction.

The present embodiment facilitates molding operation of the cylindrical body.

In an embodiment of the present invention, the cylindrical body may have a bottom surface.

The present embodiment improves strength of the cylindrical body, so that the cylindrical body is less likely to be damaged.

In an embodiment of the present invention, the attachment means may be constituted by at least one spiral ridge.

The present embodiment enables a support receiver that can be attached by screwing operation and has high holding strength to be obtained.

In an embodiment of the present invention, the attachment means may be constituted by a plurality of discontinuous annual ridges.

The present embodiment enables a support receiver that can be attached by driving operation and has high holding strength to be obtained.

In an embodiment of the present invention, the attachment means may be constituted by a plurality of discontinuous protrusions.

The present embodiment enables a support receiver that can be easily attached and has high holding strength to be obtained.

In an embodiment of the present invention, the attachment means may be constituted by a male screw to which a nut can be screwed.

The present embodiment enables a detachable support receiver to be obtained.

In an embodiment of the present invention, the elastic piece may be cut out by a U-shaped slit provided in the cylindrical body.

Of course, a direction of the slit can be selected as necessary.

The present embodiment enables a support receiver including an elastic piece having a desired spring force to be obtained.

In an embodiment of the present invention, the elastic piece may be cut out by two linear slits provided in the cylindrical body.

The present embodiment enables a support receiver including an elastic piece having a high spring force to be obtained.

In an embodiment of the present invention, the elastic piece may be cut out by an inverted T-shaped slit provided in the cylindrical body.

The present embodiment enables a support receiver including an elastic piece having a large spring force to be obtained.

A support structure using a support receiver according to the present invention is configured such that a support shaft of a supported tool is retained, with a locking claw portion provided in an inner peripheral surface of an elastic piece of a cylindrical body, by inserting the support shaft into the cylindrical body of the support receiver attached to an attachment hole of a base material.

According to the support structure using the support receiver according to the present invention, the elastic piece which retains the supported tool is provided integrally with the cylindrical body, so that the number of parts and assembly man-hours are reduced, which improves workability of assembling operation.

In addition, the elastic piece is provided integrally with the cylindrical body, so that there is no risk of components being disjoined and lost.

In a different embodiment of the present invention, the supported tool may be constituted by an angle adjustment fitting.

The present embodiment is capable of producing advantageous effects of facilitating attachment operation of the angle adjustment fitting and eliminating the risk of losing components.

### BRIEF DESCRIPTION OF DRAWINGS

Fig. 1 is a perspective view for explaining a method of using a support receiver according to a first embodiment;
Fig. 2 is a partially enlarged perspective view of Fig. 1;
Fig. 3 is a perspective view of the support receiver illustrated in Fig. 1 as viewed from above;
Fig. 4 is a perspective view of the support receiver illustrated in Fig. 1 as viewed from below;
Fig. 5 is an exploded perspective view of the support receiver illustrated in Fig. 1;
Fig. 6 is a longitudinal sectional perspective view of the support receiver illustrated in Fig. 1;
Fig. 7 is a front view of the support receiver illustrated in Fig. 1;
Fig. 8 is a left side view of the support receiver illustrated in Fig. 1;
Fig. 9 is a right side view of the support receiver illustrated in Fig. 1;
Fig. 10 is a rear view of the support receiver illustrated in Fig. 1;
Fig. 11 is a plan view of the support receiver illustrated in Fig. 1;
Fig. 12 is a bottom view of the support receiver illustrated in Fig. 1;
Fig. 13 is a sectional view for explaining a method of inserting a support shaft into the support receiver according to the first embodiment;
Fig. 14 is a partially enlarged sectional view of Fig. 13;
Fig. 15 is a sectional view illustrating a state in which the support shaft is inserted into the support receiver according to the first embodiment;
Fig. 16 is a partially enlarged sectional view of Fig. 15;
Fig. 17 is a perspective view of a support receiver according to a second embodiment as viewed from above;
Fig. 18 is a perspective view of the support receiver illustrated in Fig. 17 as viewed from below;
Fig. 19 is a front view of the support receiver illustrated in Fig. 17;
Fig. 20 is a right side view of the support receiver illustrated in Fig. 17;
Fig. 21 is a perspective view of a support receiver according to a third embodiment as viewed from above;
Fig. 22 is a perspective view of the support receiver illustrated in Fig. 21 as viewed from below;
Fig. 23 is a front view of the support receiver illustrated in Fig. 21;
Fig. 24 is a right side view of the support receiver illustrated in Fig. 21;
Fig. 25 is a perspective view of a support receiver according to a fourth embodiment as viewed from above;
Fig. 26 is a perspective view of the support receiver illustrated in Fig. 25 as viewed from below;
Fig. 27 is a front view of the support receiver illustrated in Fig. 25;
Fig. 28 is a right side view of the support receiver illustrated in Fig. 25;
Fig. 29 is a perspective view of a support receiver according to a fifth embodiment as viewed from above;
Fig. 30 is a perspective view of the support receiver illustrated in Fig. 29 as viewed from below;
Fig. 31 is a front view of the support receiver illustrated in Fig. 29;
Fig. 32 is a right side view of the support receiver illustrated in Fig. 29;
Fig. 33 is a perspective view of a support receiver according to a sixth embodiment as viewed from above;
Fig. 34 is a perspective view of the support receiver illustrated in Fig. 33 as viewed from below;
Fig. 35 is a front view of the support receiver illustrated in Fig. 33;
Fig. 36 is a right side view of the support receiver illustrated in Fig. 33;
Fig. 37 is a perspective view for explaining a method of using a support receiver according to a seventh embodiment;
Fig. 38 is a partially enlarged perspective view of Fig. 37;
Fig. 39 is a perspective view of the support receiver illustrated in Fig. 37 as viewed from above;
Fig. 40 is a perspective view of the support receiver illustrated in Fig. 37 as viewed from below;
Fig. 41 is an exploded perspective view of the support receiver illustrated in Fig. 37;
Fig. 42 is a longitudinal sectional view of the support receiver illustrated in Fig. 37;
Fig. 43 is a front view of the support receiver illustrated in Fig. 37;
Fig. 44 is a left side view of the support receiver illustrated in Fig. 37;
Fig. 45 is a right side view of the support receiver illustrated in Fig. 37;
Fig. 46 is a rear view of the support receiver illustrated in Fig. 37;
Fig. 47 is a plan view of the support receiver illustrated in Fig. 37;
Fig. 48 is a bottom view of the support receiver illustrated in Fig. 37;
Fig. 49 is a perspective view of a support receiver according to an eighth embodiment as viewed from above;
Fig. 50 is a perspective view of the support receiver illustrated in Fig. 49 as viewed from below;
Fig. 51 is an exploded perspective view of the support receiver illustrated in Fig. 49;
Fig. 52 is a front view of the support receiver illustrated in Fig. 49;
Fig. 53 is a right side view of the support receiver illustrated in Fig. 49;
Fig. 54 is a perspective view of a support receiver according to a ninth embodiment as viewed from above;
Fig. 55 is a right side view of the support receiver illustrated in Fig. 54;
Fig. 56 is a longitudinal sectional view of the support receiver illustrated in Fig. 54;
Fig. 57 is a perspective view for explaining a method of using the support receiver according to a tenth embodiment;
Fig. 58 is a partially enlarged perspective view of Fig. 57;
Fig. 59 is a front partial sectional view of Fig. 57;
Fig. 60 is a perspective view of the support receiver illustrated in Fig. 57 as viewed from above;
Fig. 61 is a perspective view of the support receiver illustrated in Fig. 57 as viewed from below;
Fig. 62 is an exploded perspective view of the support receiver illustrated in Fig. 57;
Fig. 63 is a longitudinal sectional view of the support receiver illustrated in Fig. 57;
Fig. 64 is a front view illustrating alone the support receiver illustrated in Fig. 57;
Fig. 65 is a left side view illustrating alone the support receiver illustrated in Fig. 57;
Fig. 66 is a right side view illustrating alone the support receiver illustrated in Fig. 57;
Fig. 67 is a rear view illustrating alone the support receiver illustrated in Fig. 57;
Fig. 68 is a plan view illustrating alone the support receiver illustrated in Fig. 57; and
Fig. 69 is a bottom view illustrating alone the support receiver illustrated in Fig. 57.

### DETAILED DESCRIPTION

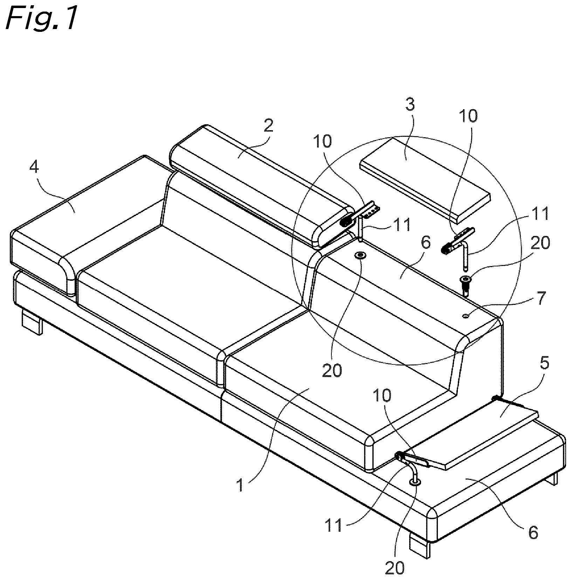

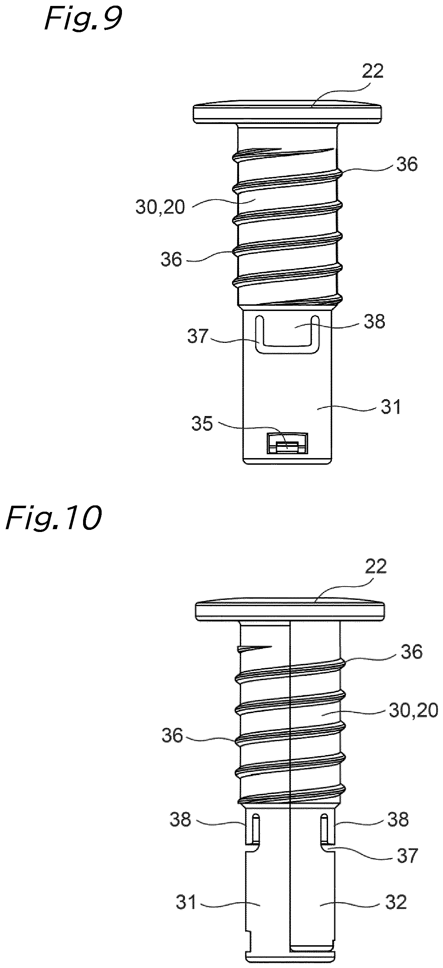

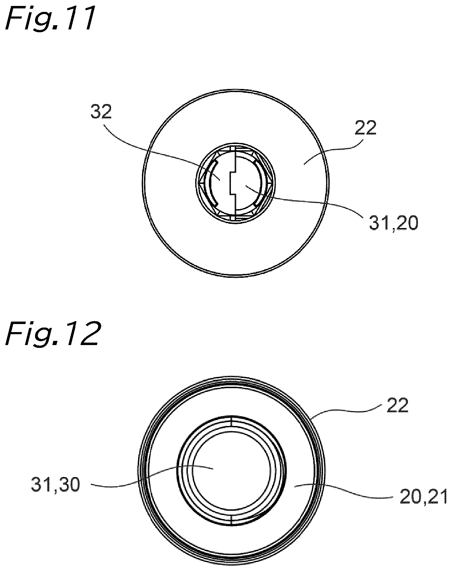

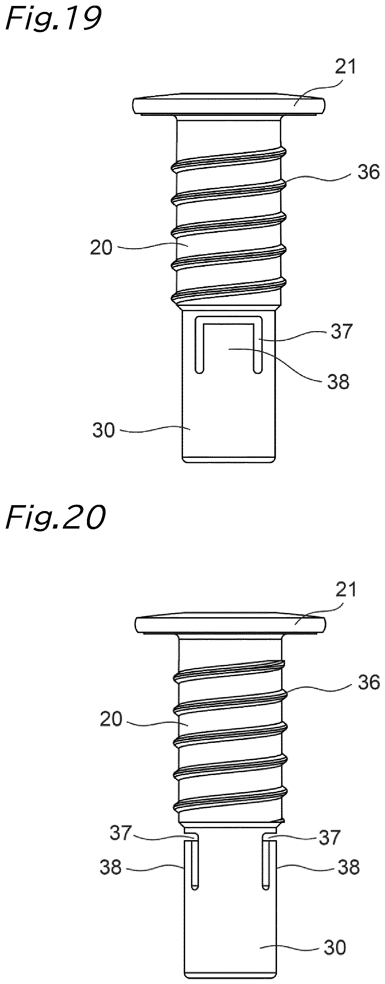

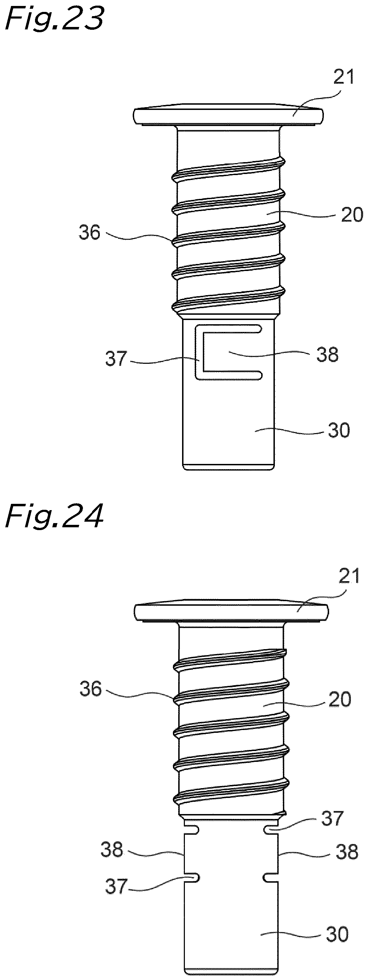

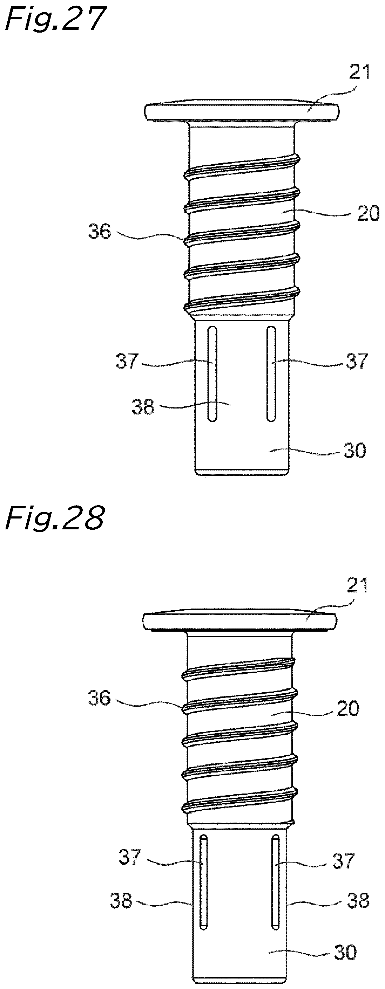

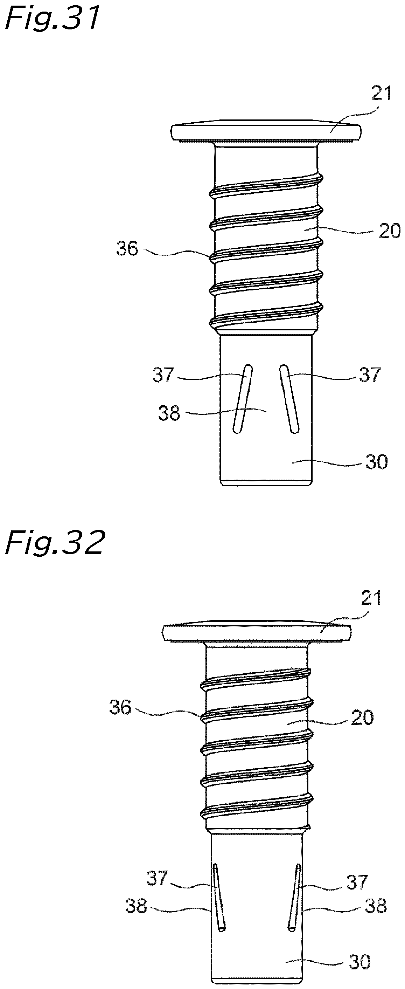

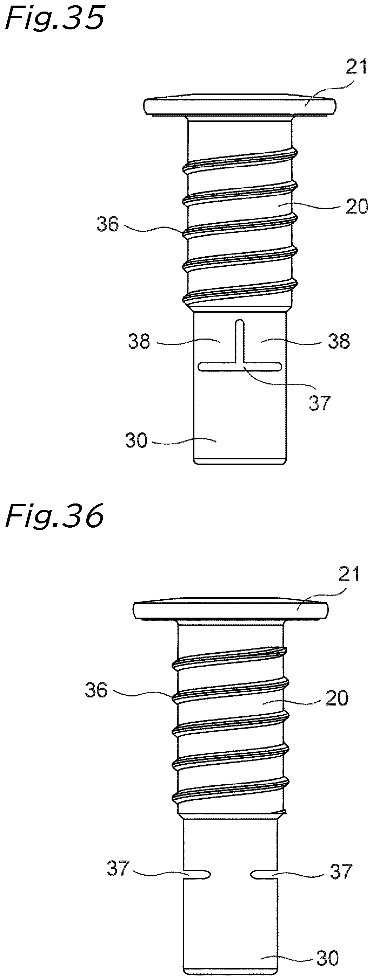

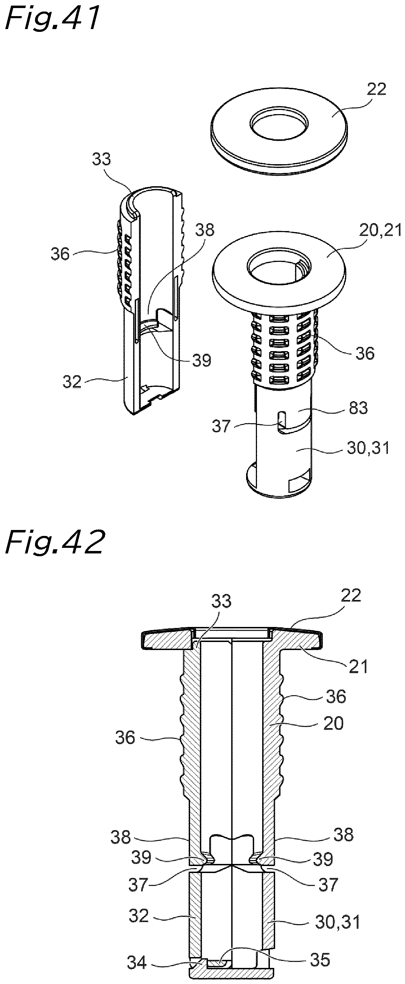

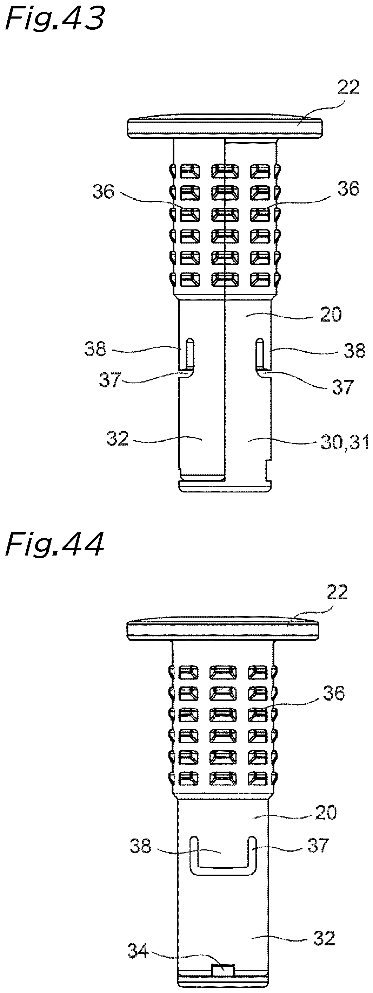

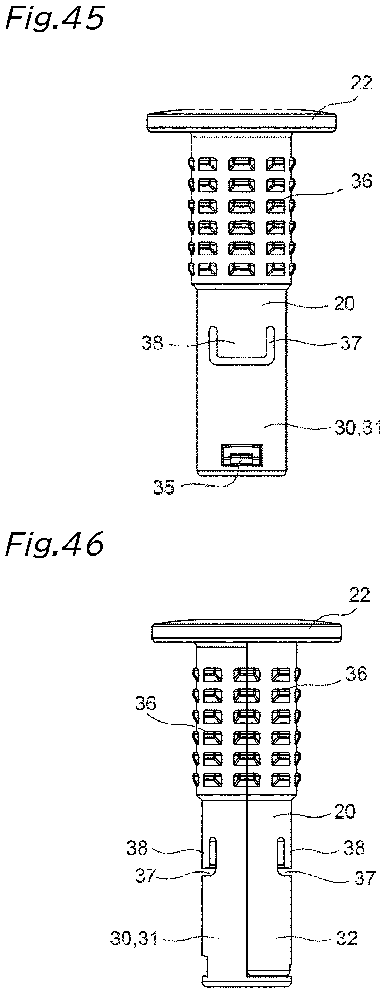

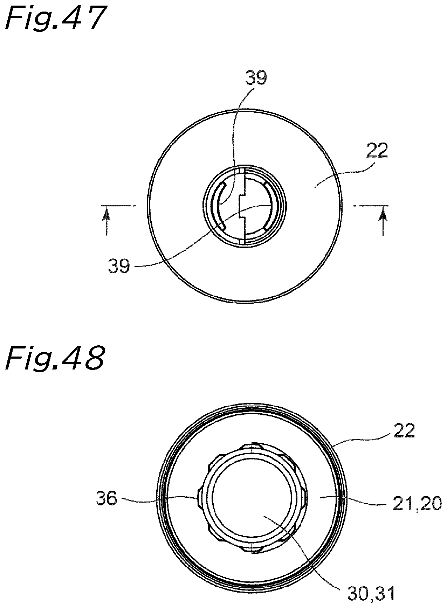

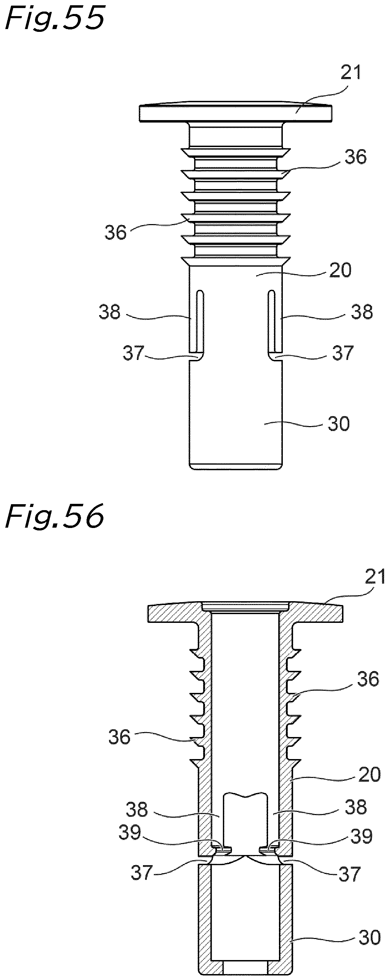

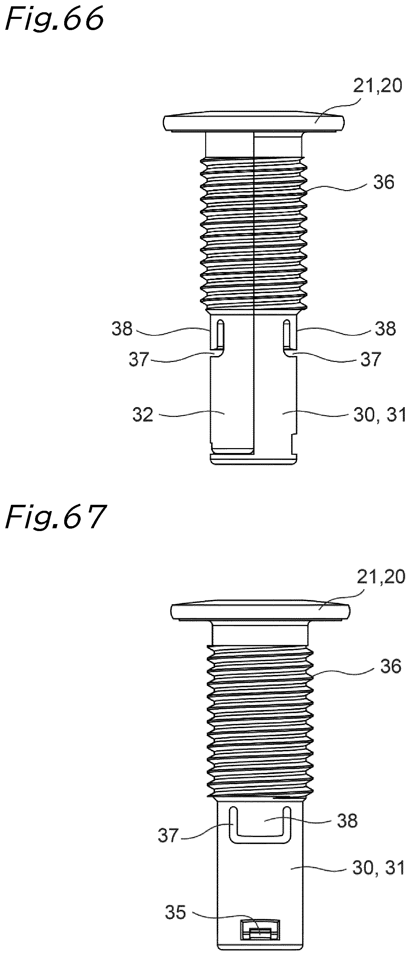

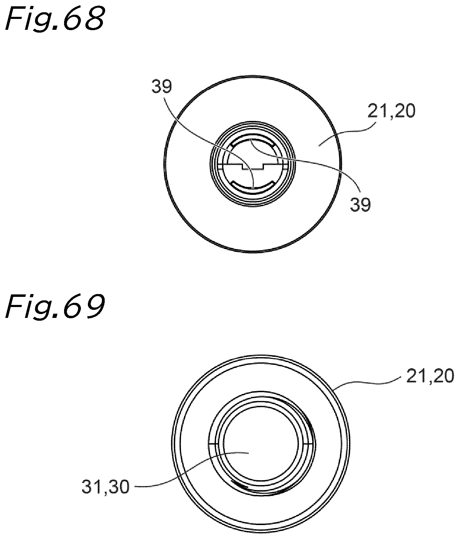

A support receiver according to the present invention will be described with reference to the accompanying drawings of Figs. 1 to 69.

Support receivers 20 according to a first embodiment are used to support substrates 3 of rotatable headrests 2 and substrates 5 of rotatable armrests 4 provided on a sofa 1, as illustrated in Figs. 1 to 16.

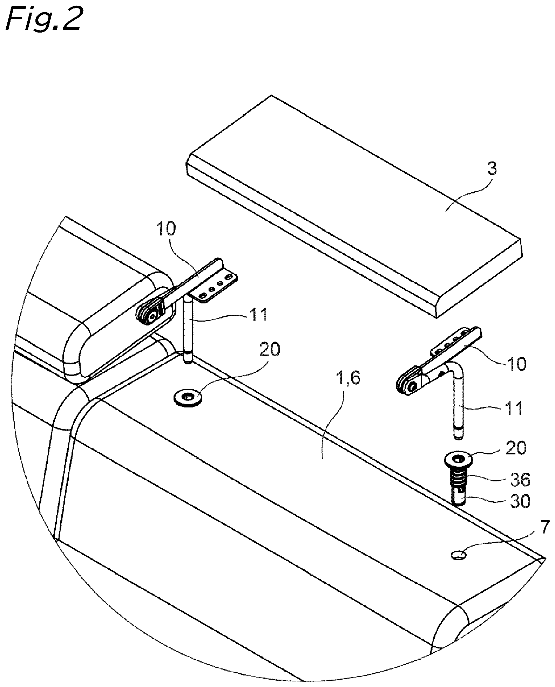

The support receivers 20 according to the present invention are screwed and embedded into attachment holes 7 provided in base materials 6 of the sofa 1 and supports support shafts 11 of angle adjustment fittings 10, as illustrated in Figs. 1 and 2. The angle adjustment fittings 10 rotatably support the substrates 3 of the headrests 2 and the substrates 5 of the armrests 4. Note that, the attachment holes 7 may be bottomed holes or through holes.

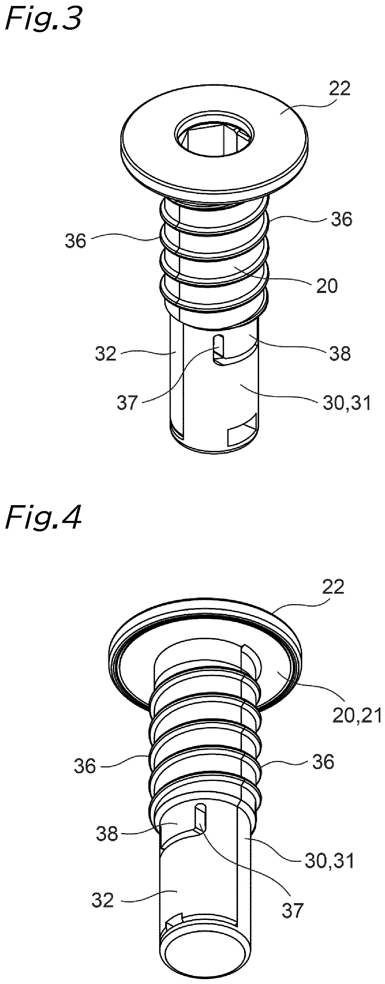

The support receiver 20 includes an annular flange portion 21 and a cylindrical body 30, as illustrated in Figs. 3 to 6. The annular flange portion 21 is covered with a cover 22 having the same shape. Note that, the cover 22 may be attached as necessary, and is not necessarily required.

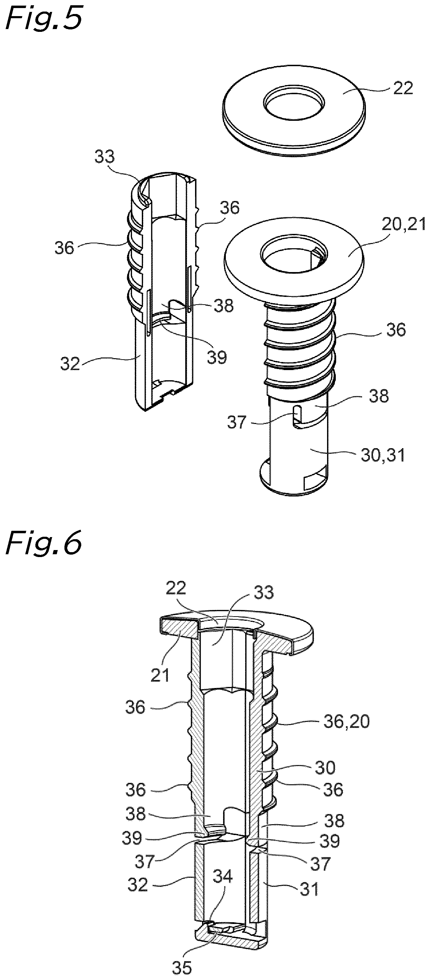

The cylindrical body 30 is dividable into two parts along an axial direction, and includes a main body portion 31 integrated with the annular flange portion 21 and a divided portion 32 dividable from the annular flange portion 21, as illustrated in Fig. 5. A semicircular rib 33 provided at an upper end of the divided portion 32 is locked to an inner edge of the annular flange portion 21. The divided portion 32 is then pressed against the main body portion 31. A bridge portion 35 of the divided portion 32 is thus elastically engaged with a locking projection 34 of the main body portion 31 to integrate the main body portion 31 and the divided portion 32 together, as illustrated in Fig. 6.

Although the cylindrical body 30 has a bottom surface, the cylindrical body 30 of course does not necessarily have a bottom surface and may be penetrated.

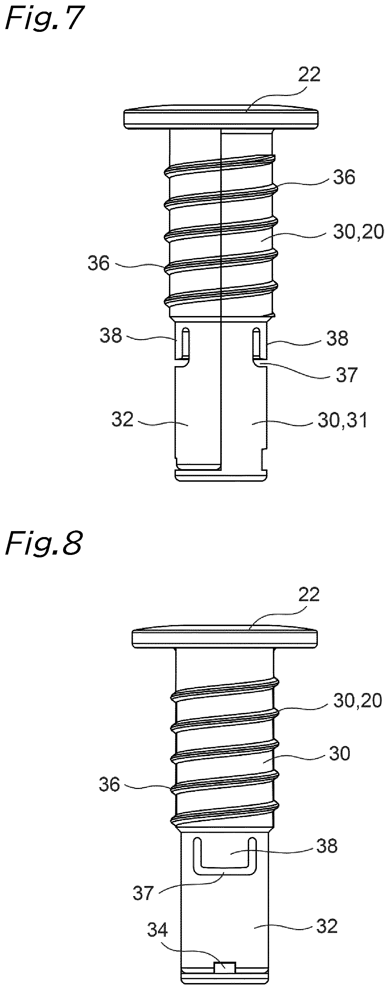

The cylindrical body 30 is formed with a spiral ridge, which constitutes an attachment means 36, on an outer peripheral surface of an upper half of the cylindrical body 30, as illustrated in Figs. 7 to 12. A downward elastic piece 38 is formed by a U-shaped slit 37 in a lower half of each of the main body portion 31 and the divided portion 32. A locking claw portion 39 (see Fig. 6), which is locked to and retained on an annular groove portion 12 of a support shaft 11 to be described later, is provided in a protruding manner at a lower end edge portion of an inner peripheral surface of each elastic piece 38.

Note that, the locking claw portion 39 is not necessarily constituted by one ridge, and may be constituted by one or more protrusions.

Of course, the upper and lower positions of the attachment means 36 and the elastic piece 38 may be reverse.

A method of using the support receiver 20 according to the present embodiment is used in a case where, for example, the angle adjustment fitting 10 that adjusts an angle of the substrate 3 of the headrest 2 is supported, as illustrated in Figs. 1 and 2.

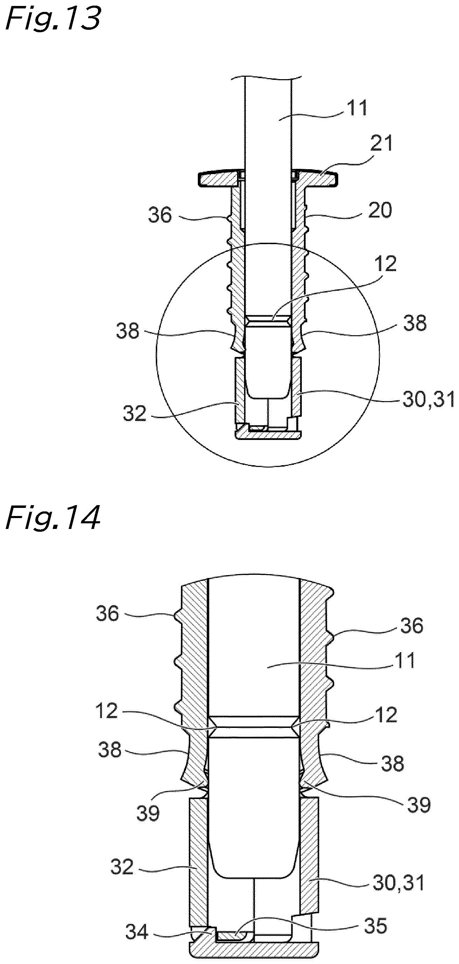

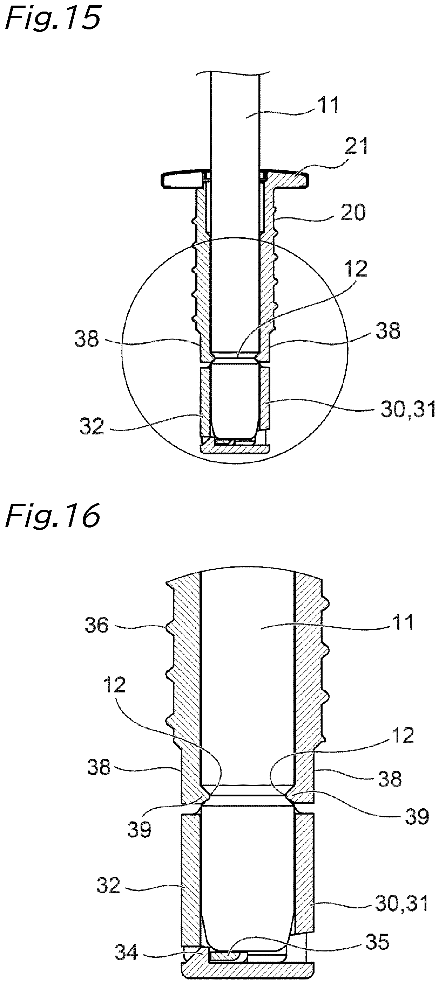

More specifically, the support receiver 20 is fixed to the attachment hole 7 by screwing and embedding the support receiver 20 into the attachment hole 7 provided in the base material 6 of the sofa 1. Next, the support shaft 11 of the angle adjustment fitting 10 is inserted into the cylindrical body 30 of the support receiver 20 and the elastic piece 38 is then pushed outward, as illustrated in Figs. 13 and 14. Further, the locking claw portion 39 of the elastic piece 38 is locked to the annular groove portion 12 provided on an outer peripheral surface of the support shaft 11 by pushing the support shaft 11, so that the support shaft 11 of the angle adjustment fitting 10 is retained to support the angle adjustment fitting 10, as illustrated in Figs. 15 and 16.

Of course, the base material 6 is not limited to a wooden material, and may be another material, for example, a metal material or a synthetic resin material.

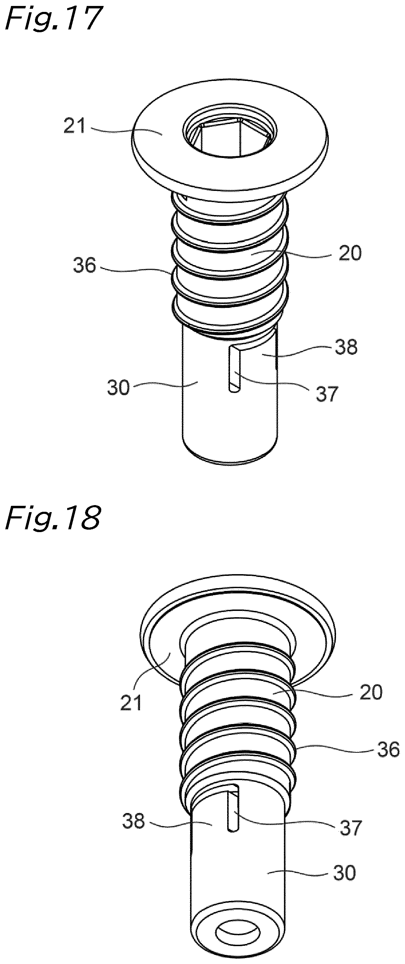

In a support receiver 20 according to a second embodiment, an upward elastic piece 38 is formed by a U-shaped slit 37 provided in a lower half of a cylindrical body 30, as illustrated in Figs. 17 to 20. A locking claw portion (not illustrated), which is engageable with an annular groove portion 12 of a support shaft 11, is provided in a protruding manner at an upper end edge portion of an inner peripheral surface of the elastic piece 38.

Of course, the cylindrical body 30 may be separable into a main body portion and a divided portion as in the first embodiment described above.

Since the other configurations are similar to those of the embodiment described above, the same portions are denoted by the same reference numerals, and the description thereof will be omitted.

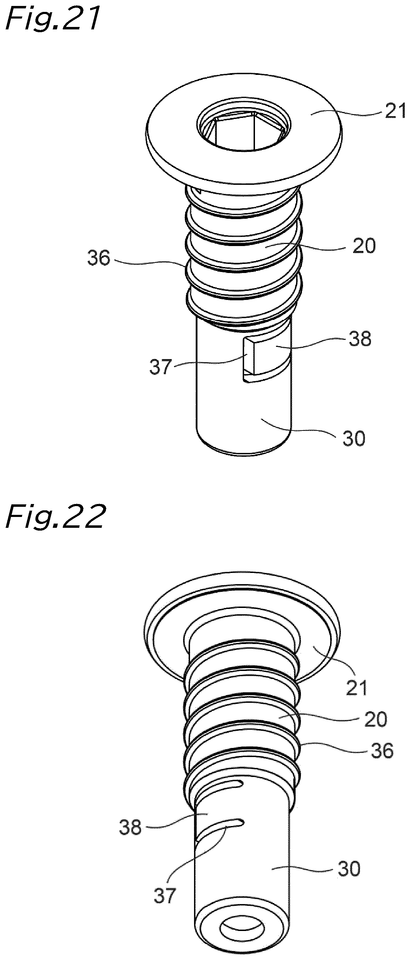

In a support receiver 20 according to a third embodiment, a lateral elastic piece 38 is formed by a U-shaped slit 37 provided in a lower half of a cylindrical body 30, as illustrated in Figs. 21 to 24. A locking claw portion (not illustrated), which is lockable with an annular groove portion 12 of a support shaft 11, is provided in a protruding manner at, for example, an upper end edge portion, a lower end edge portion, or a free end portion of an inner peripheral surface of the elastic piece 38.

Of course, the cylindrical body 30 may be separable into a main body portion and a divided portion as in the first embodiment described above.

Since the other configurations are similar to those of the embodiment described above, the same portions are denoted by the same reference numerals, and the description thereof will be omitted.

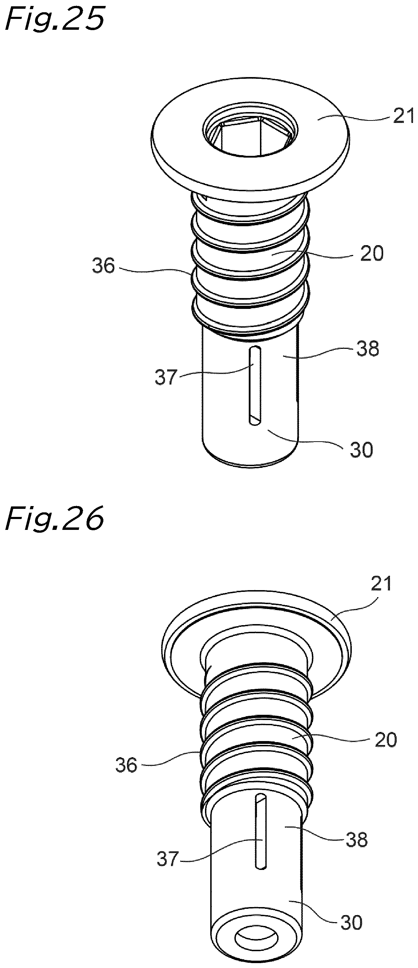

In a support receiver 20 according to a fourth embodiment, an elastic piece 38 is formed by providing two parallel linear slits 37 along an axial direction in a lower half of a cylindrical body 30, as illustrated in Figs. 25 to 28. A locking claw portion (not illustrated), which is lockable with an annular groove portion 12 of a support shaft 11, is provided in an inner peripheral surface of the elastic piece 38.

Of course, the cylindrical body 30 may be separable into a main body portion and a divided portion as in the first embodiment described above.

Since the other configurations are similar to those of the embodiment described above, the same portions are denoted by the same reference numerals, and the description thereof will be omitted.

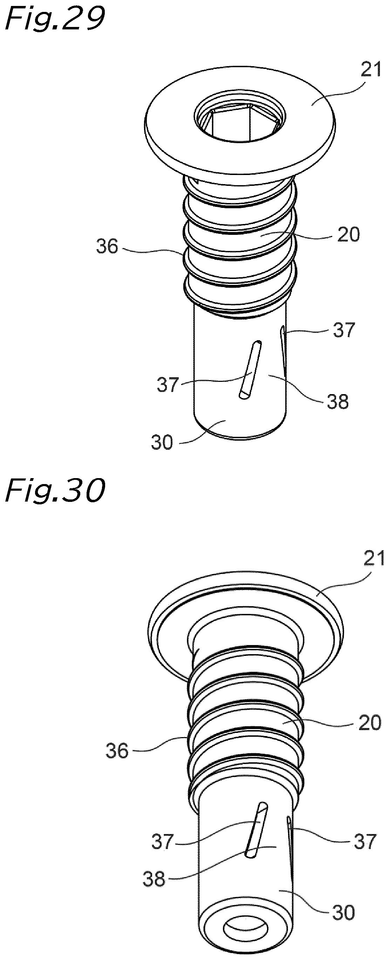

A support receiver according to a fifth embodiment is a case where an elastic piece 38 is formed by providing a pair of flared linear slits 37 in a lower half of a cylindrical body 30, as illustrated in Figs. 29 to 32. A locking claw portion (not illustrated), which is lockable with an annular groove portion 12 of a support shaft 11, is provided in an inner peripheral surface of the elastic piece 38.

Of course, the cylindrical body 30 may be separable into a main body portion and a divided portion as in the first embodiment described above.

Since the other configurations are similar to those of the embodiments described above, the same portions are denoted by the same reference numerals, and the description thereof will be omitted.

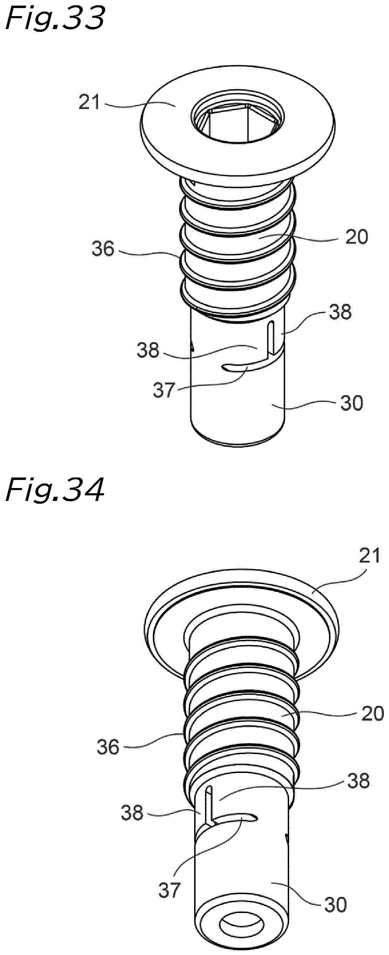

A support receiver according to a sixth embodiment is a case where elastic pieces 38 are formed by providing an inverted T-shaped slit 37 in a lower half of a cylindrical body 30, as illustrated in Figs. 33 to 36. Locking claw portions (not illustrated), which are lockable with an annular groove portion 12 of a support shaft 11, are respectively provided in an inner peripheral surface of a corner of the elastic pieces 38, 38.

Of course, the cylindrical body 30 may be separable into a main body portion and a divided portion as in the first embodiment described above.

Since the other configurations are similar to those of the embodiments described above, the same portions are denoted by the same reference numerals, and the description thereof will be omitted.

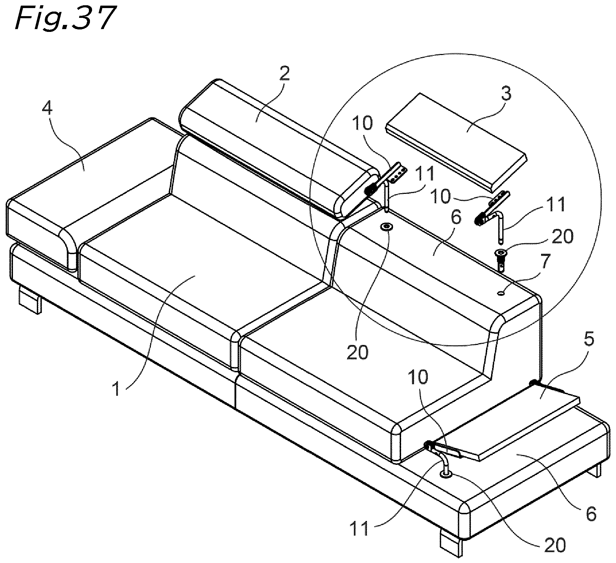

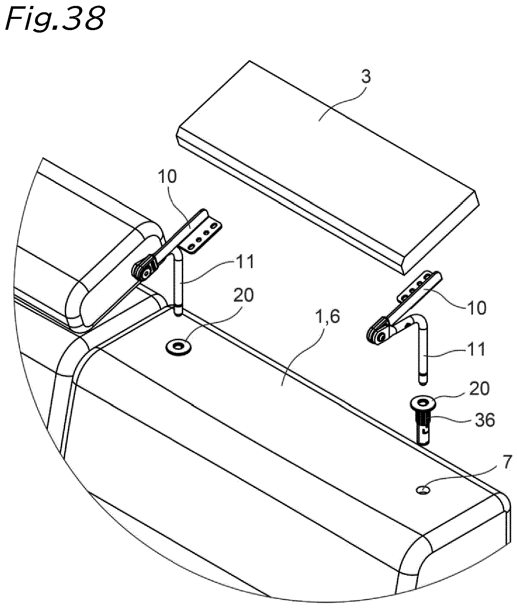

Support receivers 20 according to a seventh embodiment support support shafts 11 of angle adjustment fittings 10, which are driven and embedded into attachment holes 7 provided in base materials 6 of a sofa 1 and used for rotatably supporting substrates 3 of headrests 2 and substrates 5 of armrests 4, as illustrated in Figs. 37 and 38.

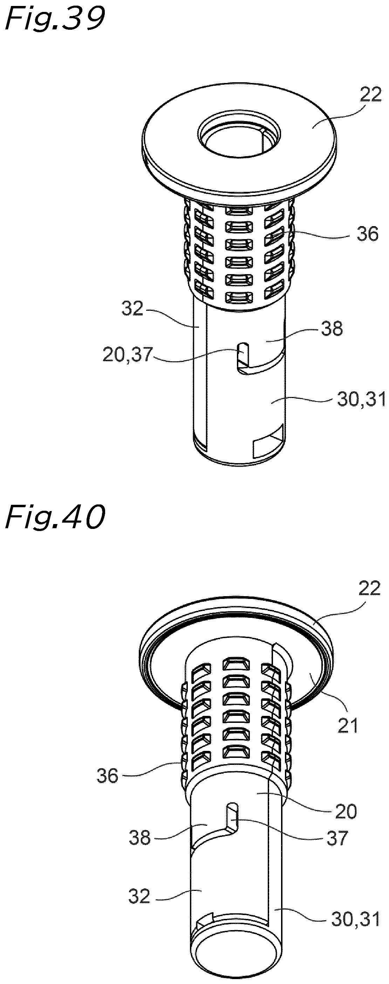

Further, the support receiver 20 according to the seventh embodiment is substantially similar to that of the first embodiment described above and is different in that an attachment means 36, which includes a large number of protrusions at a predetermined pitch, is provided on an outer peripheral surface of an upper half of a cylindrical body 30, as illustrated in Figs. 39 to 48. Since the other configurations are substantially similar to those of the first embodiment, the same portions are denoted by the same reference numerals, and the description thereof will be omitted.

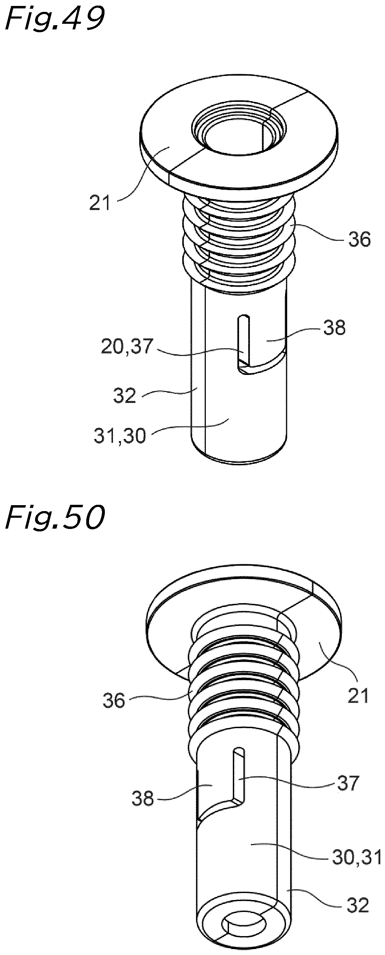

A support receiver 20 according to an eighth embodiment is provided with an attachment means 36, in which a plurality of annular ridges having substantially triangular cross sections are formed at a predetermined pitch, on an outer peripheral surface of an upper half of a cylindrical body 30, as illustrated in Figs. 49 to 53.

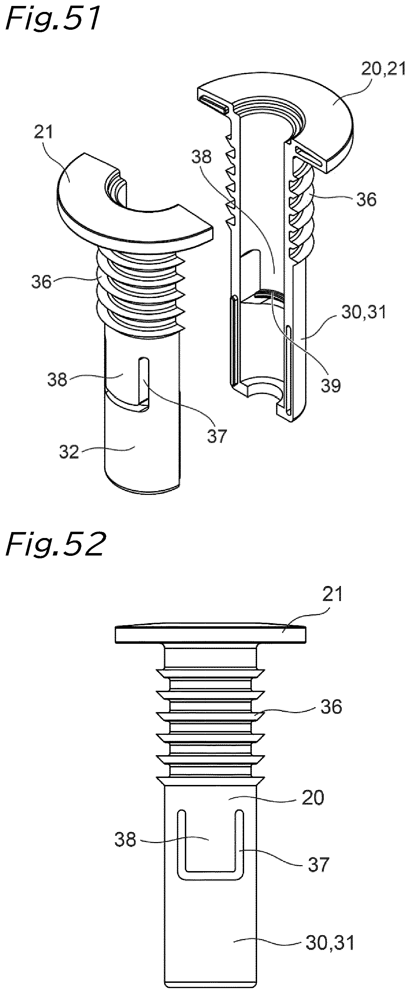

The support receiver 20 according to the present embodiment has a shape dividable into an annular flange portion 21 and the cylindrical body 30 into two parts along an axial direction, as illustrated in Fig. 51.

Since the other configurations are similar to those of the embodiments described above, the same portions are denoted by the same reference numerals, and the description thereof will be omitted.

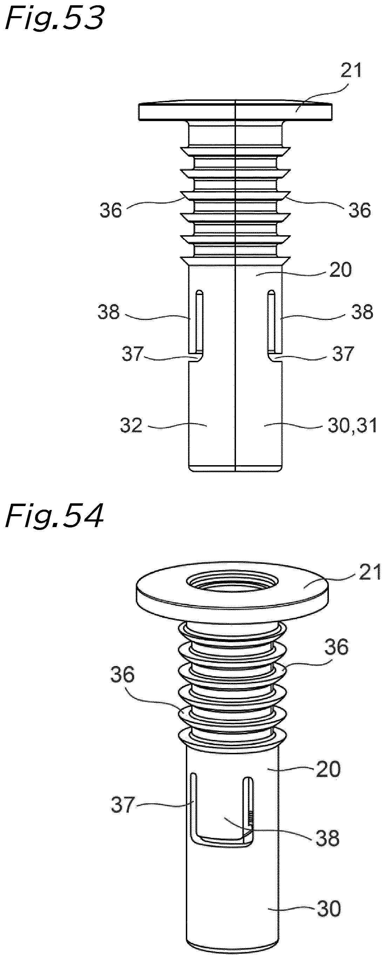

A support receiver 20 according to a ninth embodiment has the same outer shape as that of the eighth embodiment and is different in that an annular flange portion 21 and a cylindrical body 30 are integrally molded as a whole, as illustrated in Figs. 54 to 56.

Since the other configurations are similar to those of the embodiments described above, the same portions are denoted by the same reference numerals, and the description thereof will be omitted.

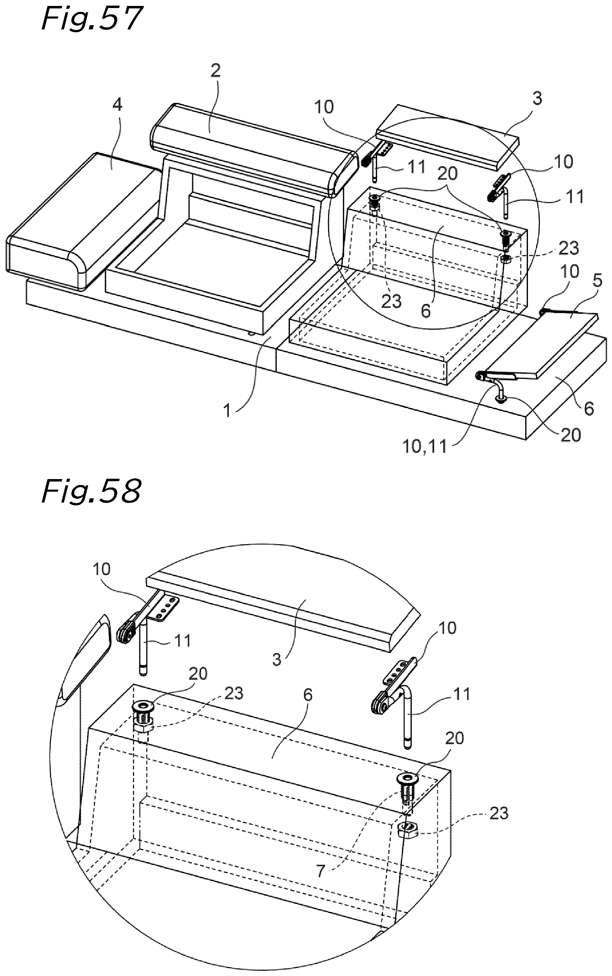

A support receiver 20 according to a tenth embodiment is inserted into a penetrating attachment hole 7, which is provided in a base material 6 of a sofa 1, and is attached to the attachment hole 7 by screwing a nut 23 to an attachment means 36 of a cylindrical body 30, as illustrated in Figs. 57 to 59. A support shaft 11 of the angle adjustment fitting 10 is then inserted into the cylindrical body 30 of the support receiver 20 and retained, so that the angle adjustment fitting 10 is supported.

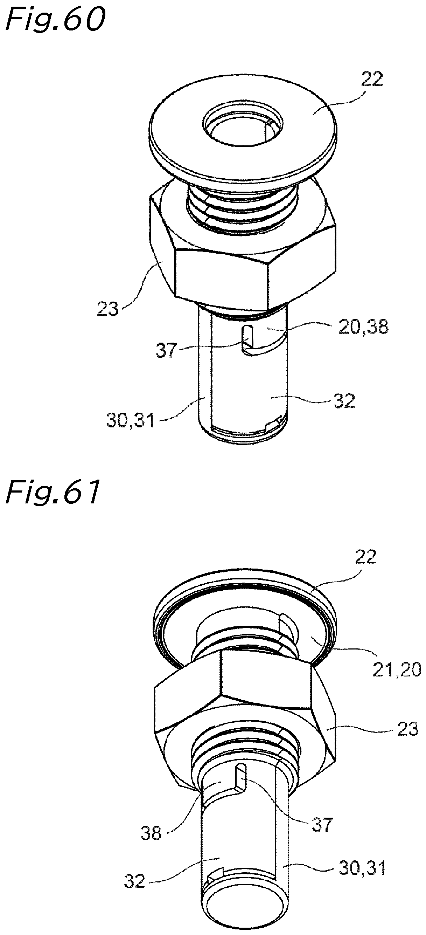

The support receiver 20 includes an annular flange portion 21 and the cylindrical body 30, as illustrated in Figs. 60 to 69. The annular flange portion 21 is covered with a cover 22 having the same shape. Note that, the cover 22 may be attached as necessary, and is not necessarily required.

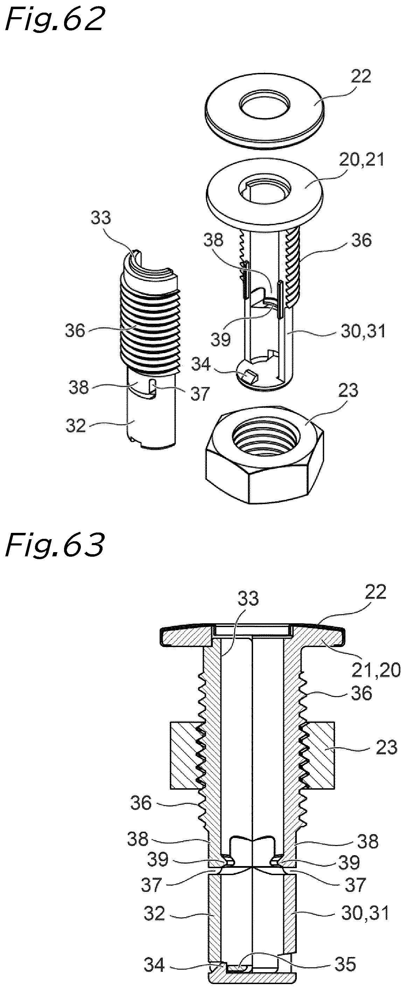

The cylindrical body 30 is dividable into two parts along an axial direction, and includes a main body portion 31 integrated with the annular flange portion 21 and a divided portion 32, as illustrated in Fig. 62. A semicircular rib 33 provided at an upper end of the divided portion 32 is locked to an inner edge of the annular flange portion 21. The divided portion 32 is pressed against the main body portion 31. A bridge portion 35 of the divided portion 32 is then elastically engaged with a locking projection 34 of the main body portion 31, so that the main body portion 31 and the divided portion 32 are integrated together.

Although the cylindrical body 30 has a bottom surface, the cylindrical body 30 of course does not necessarily have a bottom surface and may be penetrated.

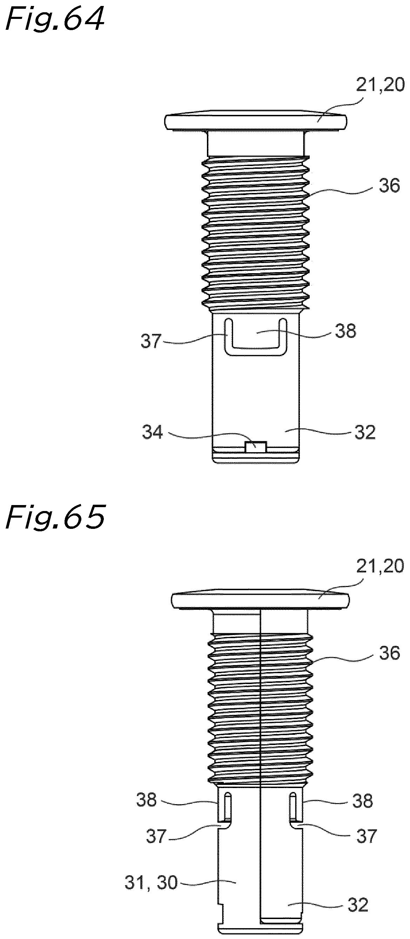

The cylindrical body 30 is formed with a male screw, as an attachment means 36, on an outer peripheral surface of an upper half of the cylindrical body 30, as illustrated in Figs. 64 to 67. A downward elastic piece 38 is formed by a U-shaped slit 37 in a lower half of each of the main body portion 31 and the divided portion 32. A locking claw portion 39, which is locked to and retained on an annular groove portion 12 of a support shaft 11 to be described later, is provided in a protruding manner at a lower end edge portion of an inner peripheral surface of each elastic piece 38. The locking claw portion 39 is not necessarily constituted by one ridge, and may be constituted by one or more protrusions.

Of course, the upper and lower positions of the attachment means 36 and the elastic piece 38 may be reverse.

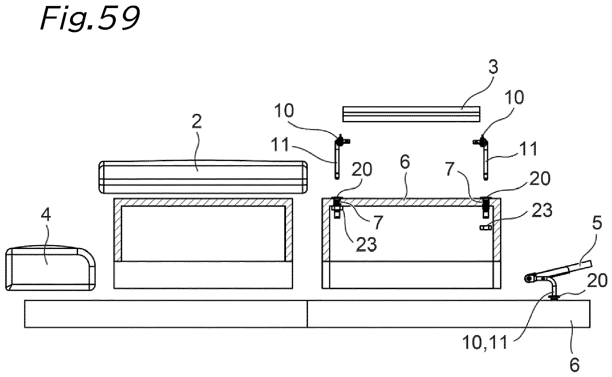

In the method of using the support receiver 20 according to the present embodiment, the cylindrical body 30 of the support receiver 20 is inserted into the attachment hole 7 of the sofa 1, and the nut 23 is screwed to a male screw, which constitutes the protruding attachment means 36, to fix the support receiver 20 to the attachment hole 7, as illustrated in Fig. 59. The support shaft 11 of the angle adjustment fitting 10 is then inserted into the cylindrical body 30 and retained.

Since the other configurations are similar to those of the first embodiment described above, the same portions are denoted by the same reference numerals, and the description thereof will be omitted.

Various embodiments have been described in detail with reference to the drawings, and various aspects of the present invention is described below. In the following description, reference numerals are added as an example.

A support receiver 20 according to a first aspect of the present invention which is a support receiver 20 attached to an attachment hole 7 of a base material 6 and has a cylindrical body 30 that supports a supported tool 10 includes:
an attachment means 36 that is provided on an outer peripheral surface of the cylindrical body 30 and is used to attach the cylindrical body 30 to an inner peripheral surface of the attachment hole 7 of the base material 6; and
at least one elastic piece 38 that is cut out by a slit 37 provided in the cylindrical body 30 and is provided with a locking claw portion 39 on an inner peripheral surface to retain the supported tool 10.

The support receiver 20 of a second aspect according to the present invention is directed to the support receiver 20 of the first aspect, in which an annular flange portion 21 is provided at an upper end of the cylindrical body 30.

The support receiver 20 according to a third aspect of the present invention is directed to the support receiver 20 of any one of the first or second aspects, in which the cylindrical body 30 is dividable along an axial direction.

The support receiver 20 according to a fourth aspect of the present invention is directed to the support receiver 20 of any one of the first to third aspects, in which the cylindrical body 30 has a bottom surface.

The support receiver 20 according to a fifth aspect of the present invention is directed to the support receiver 20 of any one of the first to fourth aspects, in which the attachment means 36 is constituted by at least one spiral ridge.

The support receiver 20 according to a sixth aspect of the present invention is directed to the support receiver 20 of any one of the first to fourth aspects, in which the attachment means 36 is constituted by a plurality of discontinuous annual ridges.

The support receiver 20 according to a seventh aspect of the present invention is directed to the support receiver 20 of any one of the first to fourth aspects, in which the attachment means 36 is constituted by a plurality of discontinuous protrusions.

The support receiver 20 according to an eighth aspect of the present invention is directed to the support receiver 20 of any one of the first to fourth aspects, in which the attachment means 36 is constituted by a male screw to which a nut 23 can be screwed.

The support receiver 20 according to a ninth aspect of the present invention is directed to the support receiver 20 of any one of the first to eighth aspects, in which the elastic piece 38 is cut out by a U-shaped slit 37 provided in the cylindrical body 30.

The support receiver 20 according to a tenth aspect of the present invention is directed to the support receiver 20 of any one of the first to eighth aspects, in which the elastic piece 38 is cut out by two linear slits 37 provided in the cylindrical body 30.

The support receiver 20 according to an eleventh aspect of the present invention is directed to the support receiver 20 of any one of the first to eighth aspects, in which the elastic piece 38 is cut out by an inverted T-shaped slit 37 provided in the cylindrical body 30.

A support structure using a support receiver 20 according to any one of the first to eleventh aspects of the present invention is configured such that a support shaft 11 of a supported tool 10 is retained, with a locking claw portion 39 of an elastic piece 38 provided in a cylindrical body 30, by inserting the support shaft 11 into the cylindrical body 30 of the support receiver 20 according to any one of the first to eleventh aspects attached to an attachment hole 7 of a base material 6.

The support structure using the support receiver 20 of a thirteenth aspect according to the present invention is configured such that the supported tool 10 is constituted by an angle adjustment fitting.

### Industrial Applicability

Of course, the support receiver of the present invention may be applied not only to a sofa, but also to other furniture such as a chair, a table, a desk, and a storage stand.

In addition, the support receiver of the present invention may of course be applied to other devices, for example, a dental treatment machine, an outdoor product, an interior part of an automobile, a test device, and an office product.

### Reference Signs List

- 1: Sofa
- 2: Headrest
- 3: Substrate
- 4: Armrest
- 5: Substrate
- 6: Base material
- 7: Attachment hole
- 10: Angle adjustment fitting (supported tool)
- 11: Support shaft
- 12: Annular groove portion
- 20: Support receiver
- 21: Annular flange portion
- 22: Cover
- 23: Nut
- 30: Cylindrical body
- 31: Main body portion
- 32: Divided portion
- 33: Rib
- 34: Locking projection
- 35: Bridge portion
- 36: Attachment means
- 37: Slit
- 38: Elastic piece
- 39: Locking claw portion

## Claims

1. A support receiver that is attached to an attachment hole of a base material and has a cylindrical body that supports a supported tool, the support receiver comprising:
an attachment means that is provided on an outer peripheral surface of the cylindrical body and is used to attach the cylindrical body to an inner peripheral surface of the attachment hole of the base material; and
at least one elastic piece that is cut out by a slit provided in the cylindrical body and is provided with a locking claw portion on an inner peripheral surface to retain the supported tool.

2. The support receiver according to claim 1, wherein an annular flange portion is provided at an upper end of the cylindrical body.

3. The support receiver according to claim 1 or claim 2, wherein the cylindrical body is dividable along an axial direction.

4. The support receiver according to any one of claims 1 to 3, wherein the cylindrical body has a bottom surface.

5. The support receiver according to any one of claims 1 to 4, wherein the attachment means is constituted by at least one spiral ridge.

6. The support receiver according to any one of claims 1 to 4, wherein the attachment means is constituted by a plurality of discontinuous annual ridges.

7. The support receiver according to any one of claims 1 to 4, wherein the attachment means is constituted by a plurality of discontinuous protrusions.

8. The support receiver according to any one of claims 1 to 4, wherein the attachment means is constituted by a male screw to which a nut can be screwed.

9. The support receiver according to any one of claims 1 to 8, wherein the elastic piece is cut out by a U-shaped slit provided in the cylindrical body.

10. The support receiver according to any one of claims 1 to 8, wherein the elastic piece is cut out by two linear slits provided in the cylindrical body.

11. The support receiver according to any one of claims 1 to 8, wherein the elastic piece is cut out by an inverted T-shaped slit provided in the cylindrical body.

12. A support structure using a support receiver wherein a support shaft of a supported tool is retained, with a locking claw portion provided in an inner peripheral surface of an elastic piece of a cylindrical body, by inserting the support shaft into the cylindrical body of the support receiver according to any one of claims 1 to 11 attached to an attachment hole of a base material.

13. The support structure using the support receiver according to claim 12, wherein the supported tool is constituted by an angle adjustment fitting.
